# EUROPÄISCHE PATENTANMELDUNG

(11) **EP 0 898 876 A1**
(43) Veröffentlichungstag der Anmeldung: **03.03.1999**
(21) Anmeldenummer: 97122000.9
(22) Anmeldetag: 13.12.1997
(51) Int. Cl.: A01G 1/08, E01C 11/22

(54) **Fertigteile für Teich-, Spiel-, Pflanzanlagen**

(30) Priorität: 29.08.1997 DE 29715482 U; 20.09.1997 DE 29716909 U
(71) Anmelder: BHE Baustoff Handels- und Entwicklungsgesellschaft mbH, 22391 Hamburg (DE)
(72) Erfinder: Pampel, Thomas, Dipl.-Ing., 22391 Hamburg (DE)
(74) Vertreter: DIEHL GLAESER HILTL & PARTNER

(57) **Zusammenfassung**

Fertigteile für den Zusammenbau mit anderen Fertigteilen für Teich-, Spiel- und/oder Pflanzanlagen. Die Fertigteile haben einen im wesentlichen L-förmigen Querschnitt (12), der nach dem Zusammenbau so ausgerichtet ist, daß der im wesentlichen horizontale Teil (11) des "L" oberhalb des vertikalen Teiles (10) ausgerichtet ist. Die Fertigteile sind mit im wesentlichen ebenen Längs-Begrenzungsflächen (12) ausgebildet, die entweder im wesentlichen senkrecht zur Längserstreckung oder im Gehrungsschnitt ausgeführt sind. In den Begrenzungsflächen (12) sind an zueinander fluchtenden Stellen Löcher oder Bohrungen zur Aufnahme von Befestigungsmitteln (13) vorgesehen.

## Beschreibung

Die Erfindung bezieht sich auf Fertigteile für den Zusammenbau mit anderen Fertigteilen für Teich-, Spiel- und/oder Pflanzanlagen.

Es sind Betonfertigteile bekannt, die an ihren Längsseiten miteinander verbunden werden können, um längliche oder auch in sich geschlossene Pflanzanlagen oder dgl. errichten zu können. Nachteil bei diesen Anlagen ist, daß die in diesem Zusammenhang verwendeten Nut- und Federverbindungen keine hinlängliche Ausrichtung gerade in denjenigen Bereichen der Profile ermöglichen, die für den Betrachter sichtbar sind. Wenn die Elemente selbst eine gewisse Größe haben, ist ein Korrigieren ohnehin schwierig und wenn erst einmal ein derartiges Element falsch gesetzt worden ist, ist kaum noch eine Korrektur möglich, u.a. auch deshalb, weil dies die bereits ineinander greifenden Nut-Federverbindungen verhindern.

Die vorliegende Erfindung befaßt sich mit dem Problem, Fertigteile der eingangs genannten Art so auszugestalten, daß nicht nur eine einfache Montage und ein einfacher Zusammenbau der einzelnen Elemente möglich ist, sondern daß darüber hinaus auch ein sehr paßgenaues Arbeiten sichergestellt werden kann.

Erreicht wird dies für die Fertigteile der eingangs genannten Art dadurch, daß die Fertigteile aus Beton, mineralischen Baustoffen, kunststoffhaltigen Baumaterialien, Tonen, Kunststoffen, Metallen, Rezyklaten oder Kombinationen dieser Baustoffe gebildet sind, die Fertigteile jeweils einen im wesentlichen L-förmigen Querschnitt aufweisen, der nach dem Zusammenbau so ausgerichtet ist, daß der im wesentlichen horizontale Teil des "L" oberhalb des vertikalen Teiles ausgerichtet ist, die einzelnen Fertigteile mit im wesentlichen ebenen Längs-Begrenzungsflächen ausgebildet sind, die entweder im wesentlichen senkrecht zur Längserstreckung oder im Gehrungsschnitt ausgeführt sind und daß in den Begrenzungsflächen der einzelnen Betonfertigteile an zueinander fluchtenden Stellen Löcher oder Bohrungen zur Aufnahme von Befestigungsmitteln, wie Stiften, Dübel oder dgl. vorgesehen sind, wobei insbesondere drei derartiger Befestigungsmittel pro Begrenzungsfläche vorgesehen sind.

Die Fertigteile für das System gemäß der Erfindung sind in Modulbauweise ausgebildet, so daß die einzelnen Elemente in beliebiger Anordnung miteinander verbunden werden können. Um Eckverbindungen herzustellen, können nun Eckmodule realisiert werden oder aber die einzelnen Kastenmodule werden mit passendem Gehrungsschnitt ausgeführt. Es sind Eckmodule vorzugsweise im Winkel von 90° denkbar, aber ebensogut auch gebogene Module mit den unterschiedlichsten Radien.

Die L-förmigen Elemente werden so gesetzt, daß der horizontale Teil des "L" oberhalb des vertikalen Teils angeordnet wird und auf diese Art und Weise können Teicheinfassungen, Pflanzkästen aber auch Sandkästen gebildet werden. Die einzelnen Module haben Abmessungen von 5 cm in den beiden Schenkeln des "L" und vertikale bzw. horizontale Erstreckungen im Bereich von 20 bis 50 cm, wobei die Längen im Bereich zwischen 50 cm und einigen Metern liegen können. Die vorgenannten Maße dienen nur zur Veranschaulichung der Größenordnung, sie sollen nicht beschränkend angesehen werden.

Wesentlich ist für das System der vorliegenden Erfindung, daß die Begrenzungsflächen der einzelnen Modulen an ganz bestimmten Stellen mit Sacklöchern oder Bohrungen ausgebildet werden, wobei die einzelnen Elemente so zusammengesetzt werden, daß die Achsen dieser Bohrungen zueinander fluchten. Um eine paßgenaue und auch hinlänglich stabile Verbindung zwischen benachbarten Modulen oder Betonfertigteilen zu realisieren, wird zuvor in eine der paarweise miteinander fluchtenden Bohrungen ein Befestigungsteil wie ein Stift oder ein Dübel eingesetzt. In der Fertigung der Fertigteile ist es unproblematisch, derartig präzise angeordnete Ausnehmungen zu realisieren, so daß hier in höchster Präzision die gewünschte Verbindung mit zueinander fluchtenden Oberflächen geschaffen werden kann.

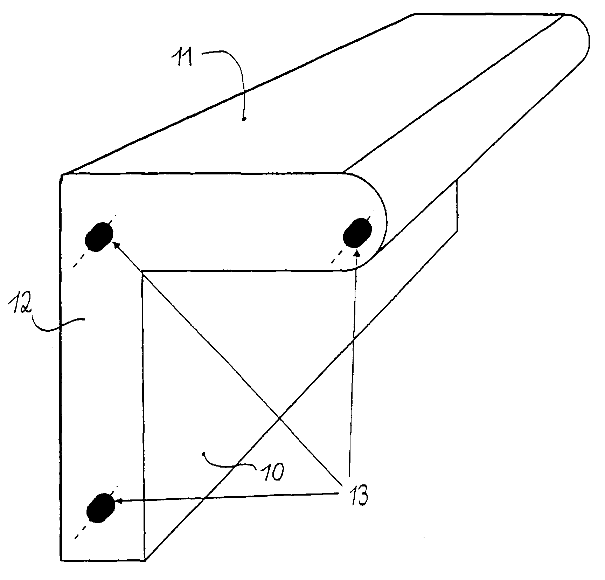

Die einzige Figur der Zeichnung zeigt eine schaubildliche Ansicht eines Betonfertigteils gemäß der Erfindung.

In der Figur ist ein sich geradlinig erstreckender Betonfertigteil gezeigt, welcher aus einem vertikalen Teil 10 und einem horizontalen Teil 11 gebildet ist. Insgesamt ist ein auf den Kopf stehendes "L" realisiert worden. Mit 12 ist eine Querschnittsfläche bezeichnet, welche sich zur Längserstreckung des Fertigteilelements 10, 11 senkrecht erstreckt. An drei Stellen im Querschnittsbereich 12 sind drei Stifte 13 gezeigt, welche in vorgefertigte Öffnungen eingesteckt worden sind. Diese Stifte 13 stehen genau senkrecht aus der Fläche 12 hervor und können mit einem entsprechend vorbereiteten Fertigteilelement so verbunden werden, daß fluchtende Oberflächen entstehen und sich eine automatische Nivellierung und Planverbindung der Module zueinander in allen drei Dimensionen ergibt.

Es liegt im Rahmen der Erfindung, benachbarte Module dauerhaft miteinander zu verbinden, indem Sicherungsteile, Lochbleche, U-förmige Stifte, Bohrer und Dübel hierzu eingesetzt werden.

## Patentansprüche

1. Fertigteile für den Zusammenbau mit anderen Fertigteilen für Teich-, Spiel- und/oder Pflanzanlagen, dadurch gekennzeichnet, daß die Fertigteile aus Beton, mineralischen Baustoffen, kunststoffhaltigen Baumaterialien, Tonen, Kunststoffen, Metallen, Rezyklaten oder Kombinationen dieser Baustoffe gebildet sind, die Fertigteile jeweils einen im wesentlichen L-förmigen Querschnitt (12) aufweisen, der nach dem Zusammenbau so ausgerichtet ist, daß der im wesentlichen horizontale Teil des "L" oberhalb des vertikalen Teiles ausgerichtet ist, die einzelnen Fertigteile mit im wesentlichen ebenen Längs-Begrenzungsflächen (12) ausgebildet sind, die entweder im wesentlichen senkrecht zur Längserstreckung oder im Gehrungsschnitt ausgeführt sind und daß in den Begrenzungsflächen (12) der einzelnen Betonfertigteile an zueinander fluchtenden Stellen Löcher oder Bohrungen zur Aufnahme von Befestigungsmitteln, wie Stiften (13), Dübel oder dgl. vorgesehen sind, wobei insbesondere drei derartiger Befestigungsmittel pro Begrenzungsfläche vorgesehen sind.
